# EUROPÄISCHE PATENTANMELDUNG

(11) **EP 4 844 235 A2**
(43) Veröffentlichungstag der Anmeldung: **25.11.2026**
(21) Anmeldenummer: 26208448.6
(22) Anmeldetag: 13.02.2026
(51) Int. Cl.: F16B 12/14

(54) **SCHNELL AUFBAUBARER, KLAPPBARER KINDERHOCHSTUHL**

(30) Priorität: 14.05.2025 DE 202025102648 U
(62) Dokumentnummer(n) der früheren Anmeldung(en) nach Art. 76 EPÜ: 26158361.1 / 4 840 363
(71) Anmelder: Hauck GmbH & Co. KG, 96242 Sonnefeld (DE)
(72) Erfinder: Hess, Andreas, 73614 Schorndorf (DE); Attinger, Sarah, 73252 Lenningen (DE); Schnabel, Sebastian, 70327 Stuttgart (DE)
(74) Vertreter: Raffay & Fleck

(57) **Zusammenfassung**

Offenbart wird eine Sicherheitsschraube (100) zum Verbinden von Elementen eines Kinderhochstuhls. Die Sicherheitsschraube (100) hat einen Gewindeabschnitt (101) und einen an einem Kopfabschnitt (102) des Gewindeabschnitts (101) ausgebildeten Kopplungsabschnitt. Der Kopplungsabschnitt bildet einen umlaufenden Kragen aus mit ersten Kopplungsstrukturen (104) auf einer dem Gewindeabschnitt (101) zugewandten Unterseite und mit zweiten Kopplungsstrukturen (105) auf einer dem Gewindeabschnitt abgewandten Oberseite und mit einem auf den Kopfabschnitt (102) aufgesetzten Griffstück (106), das den Kopfabschnitt (102) in einem innen liegenden Aufnahmeraum (108) aufnimmt und das relativ zu dem Kopfabschnitt (102) in einer axialen Richtung des Gewindeabschnitts (101) verlagerbar ist. Das Griffstück (106) ist über eine Feder (113) in eine erste axiale Position vorgespannt, in der es mit den ersten Kopplungsstrukturen (104) koppelt und eine Übertragung eines den Gewindeabschnitt (101) festziehenden Drehmoments ermöglicht, eine Übertragung eines den Gewindeabschnitt (101) lösenden Drehmoments verhindert. Wenn das Griffstück (106) gegen die Federkaft in eine zweite axiale Position gebracht ist, koppelt es mit den zweiten Kopplungsstrukturen (105) und ermöglicht eine Übertragung eines den Gewindeabschnitt (101) lösenden Drehmoments ermöglicht.

## Beschreibung

Die Erfindung betrifft eine Sicherheitsschraube zum Verbinden von Bauteilen eines Kinderhochstuhls, insbesondere eines klappbaren Kinderhochstuhls.

Kinderhochstühle sind seit langem bekannte und bewährte Möbel, um (Klein-) Kinder sitzend zu platzieren, z.B. an einem Esstisch. Sie bieten zum einen eine erhöhte Sitzposition und zum anderen häufig auch einen Rückhalt des Kindes, z.B. über einen installierten Sicherheitsbügel. Eine besondere Bauform von Kindersicherheitsstühlen zeichnet sich aus durch miteinander verbundene Seitenteile, die Standfüße für das Aufstellen auf einer Oberfläche ausbilden und zwischen denen höhenverstellbar jedenfalls ein Sitzbrett, in verschiedenen Ausfertigungen auch ein Fußbrett, angeordnet ist. Durch quer zu den Seitenteilen verlaufende Verbindungselemente sind die Seitenteile miteinander verbunden, wobei die Verbindungselemente mit den Seitenteilen verschraubt sind und durch Festziehen der Schraubverbindungen die Seitenteile aufeinander zu verspannt werden und dadurch ein auf Innenseiten der Seitenteile gebildeten Nuten eingeschobenes Sitz- und / oder Fußbrett klemmend festlegen. Hierfür sind entsprechende Schrauben an dem Kinderhochstuhl vorgesehen, die mit einem Werkzeug, häufig einem Innensechskantschlüssel (sog. Inbusschlüssel) zu betätigen sind. Diese Art von Kinderhochstühlen hat sich besonders bewährt und ist in Haushalten mit Kindern sehr gefragt und häufig im Einsatz. Ein Beispiel eines derartig gebildeten Kinderhochstuhls ist das unter der Bezeichnung "Hauck Alpha" von der Anmelderin angebotene Modell.

Um nun solche Kinderhochstühle platzsparend zu transportieren und zu verstauen, sind bereits klappbare Lösungen vorgestellt worden, wie z.B. in der DE 20 2009 011 008 U1, die einen solchen Kinderhochstuhl zeigt, bei dem ein Fußbügel, der in einer Gebrauchsstellung auf dem Boden aufliegt, nach oben verschwenkt und gegen Hauptholme der Seitenteile geklappt werden kann, um das Möbel platzsparend zu verkleinern. Bei dem in dieser Schrift offenbarten Kinderhochstuhl lastet jedoch ein der Gebrauchsstellung und wenn ein Kind in dem Kinderhochstuhl sitzt, eine starke Hebelkraft auf dem Fußbügel, die sicher abgefangen werden muss, um ein Einklappen des Kinderhochstuhls und eine daraus resultierende Gefährdung des Kindes zu verhindern.

Ein anderer, klappbarer Kinderhochstuhl ist in der DE 36 22 248A1 offenbart.

Sicherheitsschrauben allgemeiner Art sind aus der US 11,732,742 B2 sowie aus der WO 2012/053250 A1 bekannt.

Aufgabe der Erfindung ist es nun, eine zum Verbinden von Elementen eines Kinderhochstuhls geeignete Sicherheitsschraube anzugeben, die einerseits ohne ein Werkzeug betätigt werden kann und so eine einfache Änderung der Konfiguration des Kinderhochstuhls, z.B. der Positionierung von Sitz- und / oder Fußbrett, ermöglicht, die andererseits verhindert, dass sie unbeabsichtigt gelöst werden kann, z.B. durch den Kinderhochstuhl benutzende Kinder.

Mit der Erfindung wird eine Sicherheitsschraube zum Verbinden eines Seitenteils, insbesondere eines Hauptholms, eines - insbesondere wie vorstehen beschriebenen - Kinderhochstuhls mit einem Querverbindungselement angegeben. Diese Sicherheitsschraube weist einen Gewindeabschnitt und einen an einem Kopfabschnitt des Gewindeabschnitts ausgebildeten Kopplungsabschnitt auf. Der Kopplungsabschnitt bildet einen umlaufenden Kragen aus. Auf einer dem Gewindeabschnitt zugewandten Unterseite des Kragens sind erste Kopplungsstrukturen ausgebildet und auf einer dem Gewindeabschnitt abgewandten Oberseite des Kragens sind zweiten Kopplungsstrukturen ausgebildet. Die Sicherheitsschraube hat ferner ein Griffstück, das auf den Kopfabschnitt aufgesetzt ist und diesen in einem innen liegenden Aufnahmeraum aufnimmt. Das Griffstück ist dabei relativ zu dem Kopfabschnitt in einer axialen Richtung des Gewindeabschnitts verlagerbar und über eine Feder in eine erste axiale Position vorgespannt, in der es mit den ersten Kopplungsstrukturen koppelt und dabei eine Übertragung eines den Gewindeabschnitt festziehenden Drehmoments ermöglicht, eine Übertragung eines den Gewindeabschnitt lösenden Drehmoments jedoch verhindert. Wenn das Griffstück gegen die Federkaft in eine zweite axiale Position gebracht ist, koppelt es dagegen mit den zweiten Kopplungsstrukturen und ermöglicht dabei eine Übertragung eines den Gewindeabschnitt lösenden Drehmoments.

In einer möglichen und vorteilhaften Ausgestaltung der erfindungsgemäßen Sicherheitsschraube können die ersten Kopplungsstrukturen durch radial von dem Kragen nach unten vorstehende sägezahnartig gebildete Zähne gebildet sein, die jeweils auf einer in eine erste, den Gewindeabschnitt festziehende Drehrichtung weisenden Seite in axialer Richtung des Gewindeabschnitts verlaufende Flanken aufweisen und die auf in einer zweiten, entgegengesetzten, in eine den Gewindeabschnitt lösende Drehrichtung weisenden Seite jeweils eine schräg zu der axialen Richtung des Gewindeabschnitts verlaufende Flanke aufweisen. An dem Griffstück kann bei dieser Ausgestaltung insbesondere eine den Aufnahmeraum zum Gewindeabschnitt hin begrenzende Bodenplatte vorgesehen sein, durch die der Kopfabschnitt hindurchgeführt ist und in der eine zu der ersten Kopplungsstruktur korrespondierende Verzahnung gebildet ist mit in der ersten Drehrichtung weisenden, entlang der axialen Richtung des Gewindeabschnitts verlaufenden Flanken und mit in der zweiten Drehrichtung weisenden, schräg verlaufenden Flanken.

Die zweiten Kopplungsstrukturen können dabei insbesondere durch radial von dem Kragen nach oben vorstehende Zähne gebildet sein, die jedenfalls auf einer in die zweite Drehrichtung weisenden Seite jeweils eine in axialer Richtung des Gewindeabschnitts verlaufende Flanke aufweisen, und es kann an dem Griffstück eine der zweiten Kopplungsstruktur zugewandte, zu dieser korrespondierende Verzahnung vorgesehen sein mit in die zweite Drehrichtung weisenden, entlang der axialen Richtung des Gewindeabschnitts verlaufenden Flanken.

Diese Ausgestaltung ergibt eine einfache und zuverlässige Ausgestaltung einer Sicherheitsschraube mit den gewünschten Eigenschaften.

In einer weiteren möglichen vorteilhaften Ausgestaltung der Sicherheitsschraube können die radial von dem Kragen nach oben vorstehenden Zähne der zweiten Kopplungsstrukturen auf einer in die erste Drehrichtung weisenden Seite jeweils eine in axialer Richtung des Gewindeabschnitts verlaufende Flanken aufweisen und kann die an dem Griffstück vorgesehene, der zweiten Kopplungsstruktur zugewandte und zu dieser korrespondierende Verzahnung in die erste Drehrichtung weisende entlang der axialen Richtung des Gewindeabschnitts verlaufenden Flanken aufweisen. Eine solche Ausgestaltung ermöglicht, wenn das Griffstück mit der zweiten Kopplungsstruktur an dem Kopfabschnitt in Eingriff gebracht ist, ein Verdrehen des Gewindeabschnitts in beide Richtungen, also zum Festziehen sowie auch zum Lösen der Schraube.

Bei einer Sicherheitsschraube gemäß der hier vorgestellten Erfindung kann schließlich mit Vorteil zwischen dem Kopfabschnitt und einem dem Gewindeabschnitt abgewandten Deckabschnitt des Griffstücks eine Druckfeder angeordnet sein. Diese spannt das Griffstück in die Position vor, in der es mit den ersten Kopplungsstrukturen koppelt und so ein Festziehen der Schraube, nicht aber ein Lösen ermöglicht.

Ein weiterer Aspekt der Erfindung besteht schließlich in der Verwendung einer wie vorstehend beschriebenen Sicherheitsschraube zum Verbinden von zwei Elementen eines Kinderhochstuhls.

Beschrieben wird ferner ein klappbarer Kinderhochstuhl. Ein solcher klappbarer Kinderhochstuhl weist ein Gestell und ein an dem Gestell in seiner Position, insbesondere der Höhenposition, verlager-, bzw. einstellbar festlegbares Sitzbrett auf und hat zudem eine an dem Gestell angeordneten Rückenlehne. Weiterhin umfasst das Gestell zwei einander mit Abstand parallel gegenüberliegende Seitenteile und diese Seitenteile verbindende Querverbindungselemente. Jedes der Seitenteile weist jeweils einen Hauptholm sowie einen mit einem ersten seiner Enden mit dem Hauptholm verbundenen Stützholm auf.

In den Hauptholmen sind in oberen Bereichen in den aufeinander zu gerichteten Innenflächen parallel verlaufende Nuten vorgesehen. Diese dienen einer klemmenden Aufnahme von Seitenkanten des Sitzbretts in unterschiedlichen Höhenpositionen.

Die Rückenlehne ist in einem oberen Bereich zwischen den Hauptholmen angeordnet und ist mit den Hauptholmen verbunden.

Der jeweilige Stützholm jedes der Seitenteile ist mit dem zugehörigen Hauptholm in einem Bereich, in dem die Rückenlehne an dem Hauptholm angeordnet ist, derart gelenkig angelagert, dass die Stützholme um eine gemeinsame Schwenkachse relativ zu den Hauptholmen zwischen einer eingeklappten Stellung und einer Aufstellstellung bewegbar sind. In der eingeklappten Stellung liegen die Stützholme jeweils angrenzend an und im wesentlichen parallel zu dem ihnen jeweils zugeordneten Hauptholm. In der Aufstellstellung verläuft der jeweilige Stützholme mit dem ihm zugeordneten Hauptholm unter einem spitzen Winkel gespreizt und liegen untere Enden der Haupt- und Stützholme in einer gemeinsamen Aufstellebene, bilden dabei Standfüße aus.

Ferner weisen die Seitenteile jeweils einen Verbindungssteg auf, der mit einem ersten Ende an dem zugordneten Hauptholm verschwenkbar festgelegt ist und der in der Aufstellstellung mit einem zweiten Ende bis zu dem zugeordneten Stützholm reicht. Diese Verbindungsstege sind parallel zueinander ausgerichtet und sind an ihren zweiten Enden über ein Verbindungsglied miteinander verbunden. An dem Verbindungsglied ist wenigstens ein Rastelement angeordnet, das in der Aufstellstellung an einem zwischen den Stützholmen verlaufenden und mit den Stützholmen verbundenen Querverbindungselement zum Sichern der Aufstellstellung verrastet.

Ein solcher Kinderhochstuhl kann einfach zwischen einer zusammengeklappten Position und einer Gebrauchsstellung aus- und eingeklappt und insbesondere ohne Werkzeuge aufgebaut und eingestellt werden.

Eine wie vorstehend beschriebene Ausgestaltung eines klappbaren Kinderhochstuhls hat diverse Vorteile. So kann er insbesondere kompakt verkleinert werden, wenn der Kinderhochstuhl nicht gebraucht wird. Er eignet sich somit für eine platzsparende Lagerung in Abstellräumen, Abseiten, Nischen oder dergleichen. Dadurch, dass die Elemente Hauptholm und Stützholm der beiden Seitenteile in der Aufstellstellung nach unten öffnend in einem Winkel zueinander stehen und dabei über die Querverbindungselemente miteinander verbunden und dann verrastet sind, ist der aufgestellte Kinderhochstuhl besonders stabil und nicht gefährdet zusammenzuklappen, ohne dass es hierfür einer weitergehenden Sicherung etwa bedürfte. Zudem ist es möglich, den Kinderhochstuhl in der zusammengeklappten Stellung weitgehend fertig montiert, dennoch platzsparend auszuliefern, so dass ein Erwerber diesen nicht zu Hause monieren muss.

In einer möglichen und vorteilhaften Weiterbildung ist bei einem wie hier beschriebenen klappbaren Kinderhochstuhl jedem Verbindungssteg eine Gelenkstrebe zugeordnet. Jede dieser Gelenkstreben ist jeweils mit einem ersten ihrer beiden Enden in einem Bereich des ersten Endes des zugeordneten Verbindungsstegs und / oder mit dem Hauptholm und mit dem zweiten ihrer beiden Ende mit dem Querverbindungselement verbunden und weist in einem Bereich zwischen ihrem ersten und ihrem zweiten Ende jeweils ein Knickgelenk auf. Diese Gelenkstrebe bildet somit eine Begrenzung der Aufklappbewegung zwischen Hauptholm und Stützholm und gibt somit den Spreizwinkel zwischen Hauptholm und Stützholm in der Aufstellstellung vor. Dies vereinfacht das Ausklappen des Kinderhochstuhls in die Aufstellstellung, verhindert insbesondere, dass hier ein zu weites Aufklappen erfolgen kann.

In einer weiteren möglichen und vorteilhaften Ausgestaltung des hier beschriebenen klappbaren Kinderhochstuhls verlaufen die Verbindungsstege in der Aufstellstellung im wesentlichen parallel zu der Aufstellebene und liegen in der eingeklappten Stellung parallel zu den Hauptholmen und an diesen angrenzend. Dies sorgt für eine stabile Verbindung von Hauptholm und Stützholm des jeweiligen Seitenteils in der Aufstellstellung und führt zudem zu einer kompakten Form des eingeklappten Kinderhochstuhls.

Mit Vorteil kann der hier beschriebene klappbare Kinderhochstuhl ein zwischen den Hauptholmen und unterhalb des Sitzbrettes angeordnetes Fußbrett aufweisen, welches in in den Hauptholmen auf den einander zugewandten Innenflächen vorgesehenen, parallel verlaufenden Nuten in der Höhe positionsverstellbar klemmend festgelegt ist. Ein solches Fußbrett ist insbesondere für kleiner Kinder vorteilhaft, das sie darauf ihre Füße abstellen können, die in der Sitzposition des Kindes noch nicht bis zum Boden reichen und ohne ein Fußbrett frei in der Luft hängen würden.

Bei dem hier beschriebenen klappbaren Kinderhochstuhl kann mit Vorteil die Rückenlehne zugleich ein Querverbindungselement zwischen den Hauptholmen bilden oder kann die Rückenlehne an einem solchen Querverbindungselement ausgebildet sein. Dadurch werden in der Rückenlehne zwei Funktionen zugleich verwirklicht, nämlich einmal eine Rückenstütze und einmal die Verbindung zwischen den Seitenteilen.

In einer weiteren vorteilhaften Ausgestaltung kann eines der Querverbindungselemente die Hauptholme in einer etwa mittig gelegenen Längsposition miteinander verbinden. Dies führt insbesondere dazu, dass über mit dem Querverbindungselement verbundene Schrauben eine über weiter Teile der Länge der Hauptholme in etwa gleichmäßig wirkende Klemmkraft aufgebracht werden kann, um Sitz- und ggf. Fußbrett klemmend zu fixieren. Ein solches Querverbindungselement kann z.B. eine Verbindungsstange, insbesondere eine solche aus Metall, sein.

Dabei kann insbesondere das die Hauptholme in einer etwa mittig gelegenen Längsposition miteinander verbindende Querverbindungselement mittels Befestigungsschrauben an den Hauptholmen in einer solchen Weise festgelegt sein, dass durch ein Anziehen der Befestigungsschrauben der Abstand zwischen den Hauptholmen veränderbar ist für das Aufbringen einer Klemmkraft auf das zwischen den Hauptholmen angeordnete Sitzbrett und auf ein zwischen den Hauptholmen gegebenenfalls auch angeordnetes Fußbrett.

Mit besonderem Vorteil können solche Befestigungsschrauben erfindungsgemäß gebildete, handbetätigbare Sicherheitsschrauben sein, die einen als Griffstück ausgebildeten Kopf und einen Gewindeabschnitt aufweisen, wobei der Kopf mit dem Gewindeabschnitt über eine Sicherheitsstruktur derart gekoppelt ist, dass ein Aufbringen eines Drehmoments zum Festdrehen des Gewindeabschnitts möglich ist, ein Aufbringen eines Drehmoments zum Lösen des Gewindeabschnitts jedoch nur bei gleichzeitigem Aufbringen einer Stellkraft auf das Griffstück möglich ist. Dies ermöglicht ein werkzeugloses montieren der Schrauben, insbesondere für ein Lösen und Festlegen von Sitz- und/oder Fußbrett. So kann z.B. beim, insbesondere erstmaligen, Aufbau des Kinderhochstuhls, wenn das Sitzbrett und ggf. ein Fußbrett noch nicht montiert ist, der Anwender dies ohne Hinzunahme eines Werkzeugs tun und kann ein Anwender eine Änderung der Positionierung von Sitz- und / oder Fußbrett ohne Werkzeug vornehmen oder ein Fußbrett ohne Werkzeugeinsatz entfernen. Die Ausgestaltung der Befestigungsschrauben als Sicherheitsschrauben, die ein Lösen der Schrauben nur unter zusätzlichem und gleichzeitigem Aufbringen einer Stellkraft auf das Griffstück ermöglicht, verhindert, dass diese Schrauben unbeabsichtigt gelöst werden und somit Sitz- und/oder Fußbrett aus der klemmenden Festlegung gelangen können, z.B. durch an dem Griffstück spielende Kinder.

Ein hier beschriebener klappbarer Kinderhochstuhl kann zudem einen zwischen den Hauptholmen angeordneten Sicherheitsbügel aufweisen, der in einer Gebrauchsstellung des Kinderhochstuhls vor Bauch und/oder Brust des auf dem Sitzbrett sitzenden Kindes verläuft und das Kind in der sitzenden Position so sichert. Der Sicherheitsbügel kann an dem Kinderhochstuhl insbesondere lösbar mittels Verschraubung festgelegt sein. Auch hier können mit der Hand festzieh- und lösbare Schrauben verwendet werden, um einen werkzeuglosen Auf- und Umbau des Kinderhochstuhls zu ermöglichen.

Nachfolgend wird ein vorstehend beschriebener Kinderhochstuhl und wird eine erfindungsgemäße Sicherheitsschraube unter besonderem Bezug auf die beigefügten Figuren noch einmal anhand möglicher Ausgestaltungsformen näher erläutert, die jedoch nicht als den Umfang und die allgemeine Tragweite der Erfindung beschränkt verstanden werden sollen, gleichwohl aber auch weitere Besonderheiten und Vorteile der Erfindung an sich erkennen lassen, die der Fachmann auch in anderen Ausführungsformen umzusetzen versteht.

Es zeigen:
- Fig. 1: eine dreidimensionale Ansicht einer möglichen Ausgestaltungsform eines hier beschriebenen klappbaren Kinderhochstuhls in der Aufstellstellung und in einer Ansicht schräg von vorn oben;
- Fig. 2: eine dreidimensionale Ansicht der Ausgestaltungsform eines hier beschriebenen klappbaren Kinderhochstuhls aus Fig. 1 in der Aufstellstellung und in einer Ansicht schräg von hinten oben;
- Fig. 3: in vier Darstellungen a bis d den Kinderhochstuhl aus Fig. 1 in einer Perspektive wie in Fig. 2 beim Überführen von der eingeklappten Stellung (Fig. 3a) in die Aufstellstellung (Fig. 3d);
- Fig. 4: in vier Darstellungen a bis d den Kinderhochstuhl aus Fig. 1 in einer Seitenansicht beim Überführen von der eingeklappten Stellung (Fig. 4a) in die Aufstellstellung (Fig. 4d), wobei in dieser Ansicht nur eines der Seitenteile gezeigt, das zweite Seitenteil weggeschnitten ist und wobei auf der Innenseite des Hauptholms ausgebildete, in der Ansicht eigentlich verborgene Nuten für eine bessere Veranschaulichung auf der Außenseite des Hauptholms eingezeichnet sind;
- Fig. 5: eine Ansicht des Kinderhochstuhls aus Fig. 1 in einer längsgeschnittenen Ansicht des eingeklappten Zustands;
- Fig. 6: eine Ansicht des Kinderhochstuhls aus Fig. 1 in einer längsgeschnittenen Ansicht der Aufstellstellung;
- Fig. 7: eine der Fig. 1 vergleichbare dreidimensionale Ansicht des in dieser Fig. 1 gezeigten klappbaren Kinderhochstuhls, jedoch ohne montierten Sicherheitsbügel;
- Fig. 8: in einer Explosionsdarstellung in einer ersten Perspektive eine erfindungsgemäße Sicherheitsschraube in einer möglichen Ausgestaltung;
- Fig. 9: in einer Explosionsdarstellung in einer zweiten Perspektive die erfindungsgemäße Sicherheitsschraube aus Fig. 8; und
- Fig. 10: in einer Explosionsdarstellung in einer Seitenansicht die erfindungsgemäße Sicherheitsschraube aus Fig. 8.

In den Figuren sind verschiedene Ausführungsformen gezeigt und veranschaulicht, die unterschiedliche Aspekte des hier beschriebenen Kinderhochstuhls sowie einer erfindungsgemäßen Sicherheitsschraube betreffen.

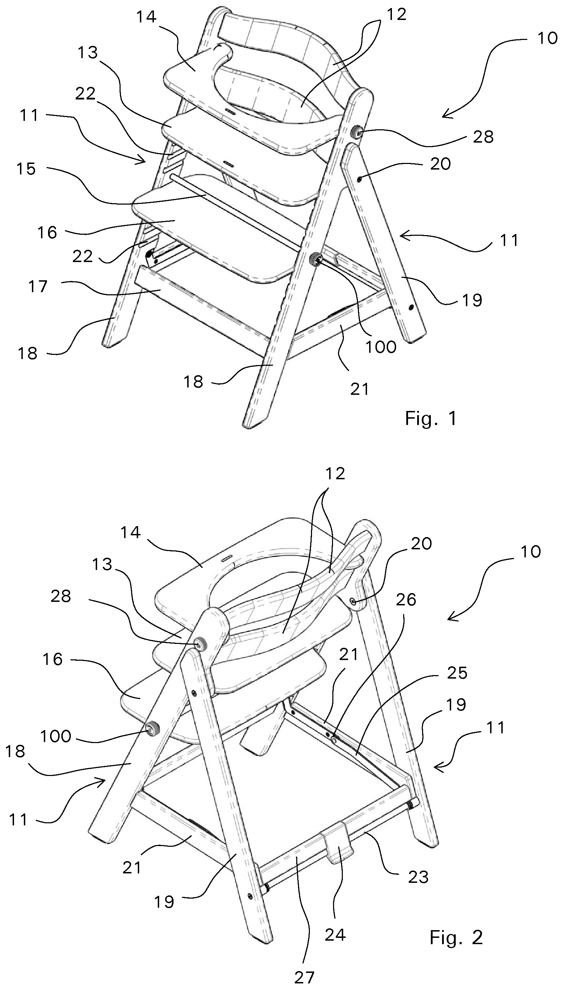

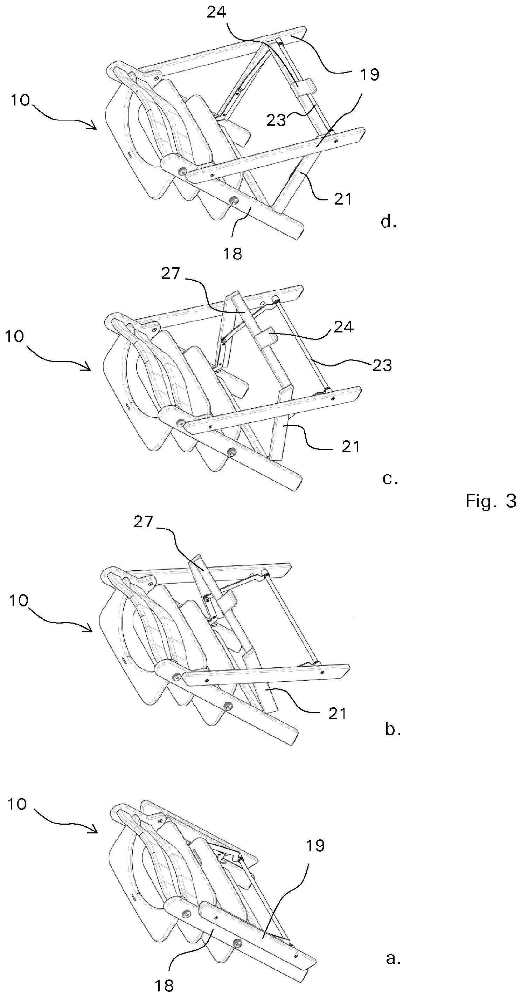

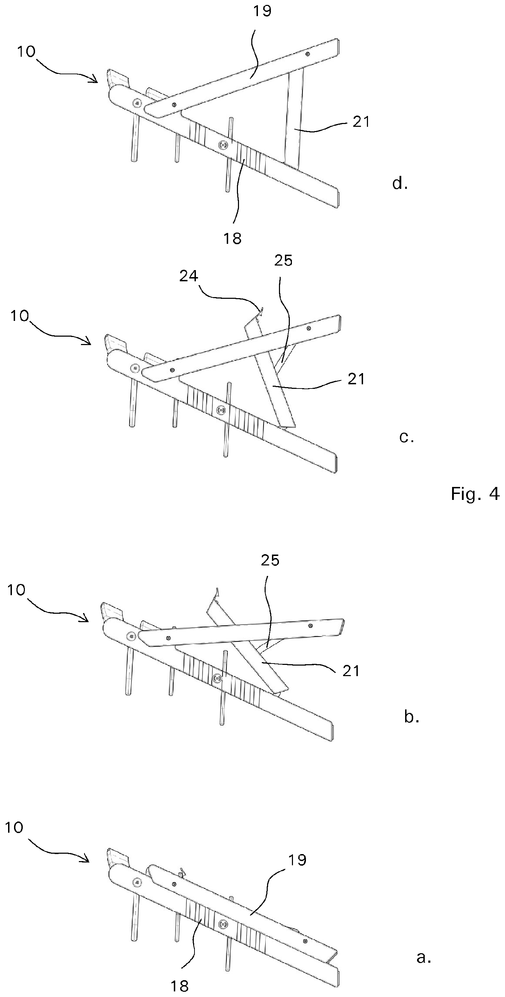

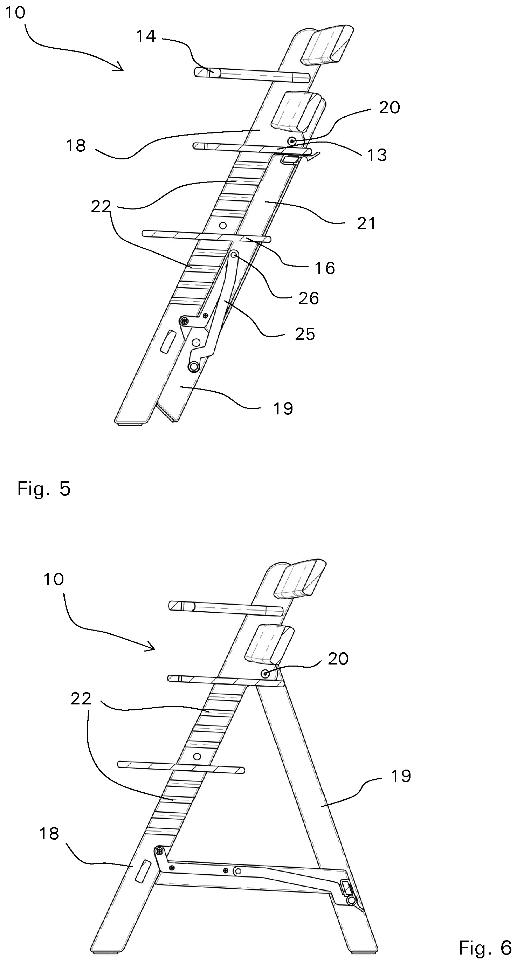

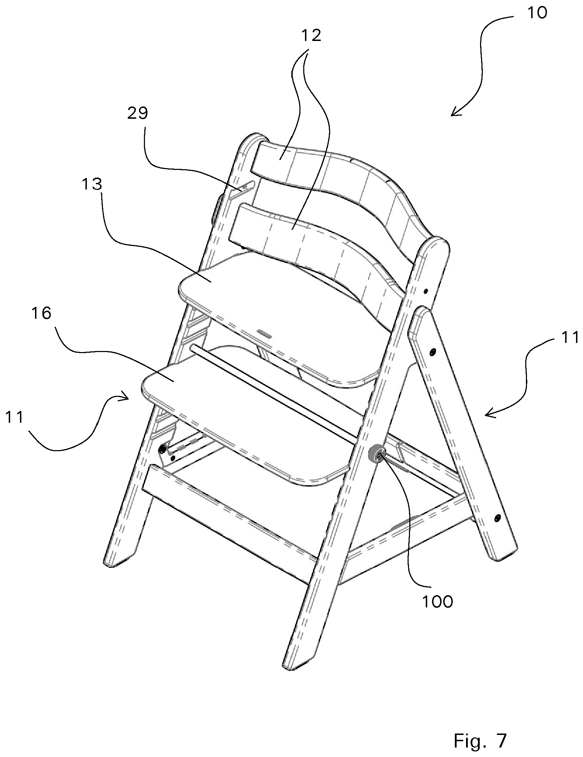

In den Figuren 1 bis 7 ist dabei zunächst einmal ein Ausführungsbeispiel eines hier beschriebenen klappbaren Kinderhochstuhls gezeigt. Dieser Kinderhochstuhl ist in den Figuren allgemein mit dem Bezugszeichen 10 bezeichnet. Die Figuren 1 und 2 zeigen den Kinderhochstuhl 10 dabei jeweils in dreidimensionaler Darstellung aus verschiedenen Ansichten in einer Aufstellstellung. Die Figuren 3 und 4 veranschaulichen den Klappvorgang und das Zusammenwirken der beteiligten Elemente des Kinderhochstuhls 10 beim Zusammen- bzw. Auseinanderklappen. Die Figuren 5 und 6 zeigen geschnittene Darstellungen des Kinderhochstuhls 10 in den beiden Positionen, einer eingeklappten Stellung (Fig. 5) und einer ausgeklappten Aufstellstellung (Fig. 6), in der der Kinderhochstuhl 10 zum Aufnehmen eines darauf sitzenden Kindes bereit ist. Fig. 7 schließlich zeigt eine Darstellung des Kinderhochstuhls 10 in einer Perspektive wie in Fig. 1 dargestellt, jedoch ohne den in den vorherigen Darstellungen gezeigten, demontierbaren Sicherheitsbügel.

Unter Verweis auf diese Figuren 1 bis 7 wird nachfolgend der Aufbau des Kinderhochstuhls 10 und wird anschließend auch das Vorgehen zum Ein- bzw. Ausklappen des Kinderhochstuhls 10 zwischen den beiden Positionen eingeklappte Stellung und Aufstellstellung näher erläutert.

Der Kinderhochstuhl 10 lässt sich zunächst in folgende Gruppen von Bauelementen, bzw. Bauelemente an sich unterteilen, die miteinander verbunden sind. Dies sind zwei einander parallel gegenüber liegende Seitenteile 11 und die folgenden zwischen den Seitenteilen 11 verlaufenden und diese miteinander verbindenden weiteren Elemente und Bauteile: eine aus zwei, hier geschwungen brettartig gebildeten und insbesondere aus Holz bestehenden, Rückenlehnelementen 12 gebildet Rückenlehne, ein Sitzbrett 13, ein wahlweise montierbarer Sicherheitsbügel 14, eine Verbindungsstange 15, ein Fußbrett 16, eine Querstrebe 17, eine Querstange 23 und ein Verbindungsglied 27. Die beiden Seitenteile 11 die Verbindungsstange 15 und die Querstrebe 17 sowie die Querstange 23 können dabei als zusammen ein Gestell bildend gesehen werden, an dem die Rückenlehnenelemente 12 und die Bretter Sitzbrett 13 und Fußbrett 16 sowie der Sicherheitsbügel 14 festgelegt sind.

Der Sicherheitsbügel 14 ist dabei in an sich bekannter Weise lösbar an dem Kinderhochstuhl 10 angebracht. Er dient dem Rückhalt und der Sicherung kleiner Kinder in der Sitzposition sitzend auf dem Sitzbrett 13. Wenn der Kinderhochstuhl 10 von größeren Kindern verwendet wird, die bereits ohne Sicherung auf dem Sitzbrett 13 sitzen können, kann der Sicherheitsbügel 14 von dem Kinderhochstuhl 10 gelöst und abgenommen werden. Dies kann z.B. durch einen manuell betätigbaren Rastmechanismus erfolgen, durch Verschrauben oder auch auf andere für bekannte Kinderhochstühle dieser Art bereits umgesetzte Lösungen und Vorgehensweisen. Der Sicherheitsbügel 14 ist in dem gezeigten Ausführungsbeispiel mit einer brettartig abgeflachten Oberseite gebildet, die auch als Ablage, z.B. von einem Speisegefäß, aus dem ein in dem Kinderhochstuhl 10 sitzendes Kind gefüttert werden soll, dienen kann.

Die Seitenteile 11 umfassen zunächst jeweils einen Hauptholm 18 und einen Stützholm 19, die jeweils parallel zueinander und fluchtend ausgerichtet sind und die in dem gezeigten Ausführungsbeispiel brettartig gebildet sind, insbesondere aus Holz. Die beiden Holme, Hauptholm 18 und Stützholm 19, jedes der Seitenteile sind miteinander in einer Gelenkverbindung 20 gelenkig verbunden. Genauer ist der jeweilige Stützholm 19 mit einem ersten, oberen Längsende dort in einem oberen Abschnitt des Hauptholms 18 an letzterem gelenkig festgelegt. Wie insbesondere in Fig. 2 zu erkennen ist, ist an dem Hauptholm 18 in der Position, in der der Stützholm 19 an diesem jeweils gelenkig festgelegt ist, ein rückwärtig auskragender Vorsprung gebildet. Die beiden Gelenkverbindungen 20 sind auf einer gemeinsamen Gelenkachse positioniert, die zugleich die Schwenkachse der möglichen gelenkigen Bewegung zwischen den Hauptholmen 18 und den Stützholmen 19 bildet.

Auf den jeweils einander zugewandten Innenseiten der Hauptholme 18 sind in mehreren Höhenpositionen liegende und in der Aufstellposition waagerecht verlaufende und auf den beiden Seiten paarweise parallel liegende Nuten 22 gebildet. Diese Nuten 22 dienen in einer für diese Art von Kinderhochstühlen an sich bekannten Weise dem Festlegen von Sitzbrett 13 und Fußbrett 16, wobei das Fußbrett 16 auch fortgelassen werden kann, insbesondere dann, wenn ein den Kinderhochstuhl 10 nutzendes Kind bereits so groß ist, dass es auf dem in einer angepassten Höhenposition montierten Sitzbrett 13 sitzend mit den Füßen bis zum Fußboden reicht und die Füße dort abstellen kann, dafür kein gesondertes Fußbrett 16 mehr benötigt. Um das Sitzbrett 13 und ggf. auch das Fußbrett 16 an den Seitenteilen 11 zu fixieren, wird das oder werden die jeweiligen Bretter mit ihren Seitenkanten jeweils so in ein höhenmäßig passendes Paar von Nuten 22 eingeschoben, dass das jeweilige Brett in der passenden Höhenposition sitzt und zudem eine angepasste in dem Kinderhochstuhl 10 nach vorn hin vorstehende Länge aufweist. Durch Aufbringen einer die Seitenteile 11 aufeinander zu spannenden Spann- bzw. Klemmkraft wird das oder werden die Bretter dann klemmend fixiert. Wie diese Spann- bzw. Klemmkraft aufgebracht wird, wird nachstehend näher erläutert.

In dem gezeigten Ausführungsbeispiel dient ein die in in etwa mittig der Längserstreckung des Hauptholms 18 gelegener Position quer zwischen den Seitenteilen 11 verlaufende Verbindungsstange 15 dem wie vorstehend beschriebenen festen Verspannen der Seitenteile 11 und dem Aufbringen der vorstehend genannten Spann- bzw. Klemmkraft. Diese Verbindungsstange 15 hat jeweils ein in ihrer Längsrichtung verlaufendes Innengewinde, in welche Innengewinde Schrauben, in diesem Ausführungsbeispiel insbesondere Sicherheitsschrauben, vorzugsweise wie nachstehend näher beschriebene, erfindungsgemäße Sicherheitsschrauben 100, eingeschraubt werden können. Durch ein Festschrauben dieser Schrauben 100 werden die Seitenteile 11 aufeinander zu gezogen und bilden so insbesondere die Hauptholme 18 die vorstehend erwähnte Spann- bzw. Klemmkraft auf das Sitzbrett 13 und, sofern eingesetzt, auch auf das Fußbrett 16 aus und fixieren das Brett bzw. die Bretter so in ihrer jeweiligen Position.

Die Querstrebe 17, die in diesem Ausführungsbeispiel ebenfalls brett- oder leistenförmig gebildet ist und insbesondere aus Holz bestehen kann, kann z.B. mit einer an jeder der Stirnseiten ausgebildeten Feder in einer entsprechenden Nut des zugeordneten Hauptholms 18 einfach eingesetzt und ebenfalls durch die wie vorstehend erwähnt aufgebrachte Spann- oder Klemmkraft fixiert sein. Sie kann aber auch mit den Hauptholmen 18 fest verbunden, z.B. verleimt oder in einer im Möbelbau typischen Weise verschraubt, sein.

In ähnlicher Weise können auch die Rückenlehnenelemente 12 in in den Hauptholmen 18 ausgebildeten Aufnahmen eingesetzt und durch das Verspannen festgelegt sein, oder sie könne mit den Hauptholmen 18 verbunden sein, z.B. verleimt oder verschraubt.

Wie bereits vorstehend erläutert, können die Stützholme 19 relativ zu den Hauptholmen 18 um die durch die beiden Gelenkverbindungen 20 verlaufende Schwenkachse relativ zueinander verschwenkt werden, und zwar zwischen einer eingeklappten Stellung, in der die Stützholme 19 an den Hauptholmen 18 anliegen und parallel zu diesen verlaufend orientiert sind, und einer ausgeklappten Aufstellstellung, in der die Stützholme 19 und die Hauptholme 18 jeweils entgegengerichtet schräg zur Lotrechten verlaufen und so ein in einem spitzen Winkel nach unten geöffnetes V oder aber ein A zwischen sich beschreiben.

Zum Verriegeln der Aufstellstellung, also zum Fixieren der Position des jeweiligen Stützholms 19 der Seitenteile 11 zu dem zugehörigen Hauptholm 18, sind an den Seitenteilen 11 Verbindungsstege 21 vorgesehen, die ebenfalls brett- oder leistenartig und vorzugweise aus Holz gebildet sind. Diese Verbindungsstege 21 sind in einem unteren Abschnitt des jeweils zugehörigen Hauptholms 18 gelenkig und verschwenkbar angebunden und zwar so, dass sie ebenfalls um eine gemeinsame Achse geschwenkt werden können, wobei diese Achse parallel zu der Schwenkachse verläuft, um die die Stützholme 19 relativ zu den Hauptholmen 18 verschwenkt werden können. Die Verbindungsstege 21 sind an ihren von den Hauptholmen 18 weg weisenden Enden über ein Verbindungsglied 27 miteinander verbunden, das in dem gezeigten Ausführungsbeispiel ebenfalls brett- oder leistenförmig und vorzugsweise aus Holz gebildet ist. an dem Verbindungsglied 27 ist in etwa mittig von dessen Längsrichtung eine in der Aufstellstellung nach unten weisende Rastlasche 24 festgelegt, die an ihrem freien Ende eine Hakenstruktur aufweist. Diese Rastlasche 24 ist aus einem flexiblen Material, z.B. einem elastischen Kunststoffmaterial. Sie hintergreift mit der Hakenstruktur in der Aufstellstellung die Querstange 23 und verriegelt so die Stützholme 19 relativ zu den Hauptholmen 18 in der Aufstellstellung.

In dem gezeigten Ausführungsbeispiel sind zudem zwei jeweils zwischen dem Hauptholm 18 und dem Stützholm 19 eines Seitenteils 11 verlaufende Gelenkstreben 25 vorgesehen, die jeweils zwei Abschnitte aufweisen, die über ein Gelenk 26 verbunden sind. Ein erster Abschnitt der Gelenkstreben 25 ist gelenkig an dem jeweils zugeordneten Hauptholm 18 angeschlagen und mit dem Verbindungssteg 21 fest verbunden. Der Verbindungssteg 21 ist also vermittelt über den ersten Abschnitt der Gelenkstrebe 25 gelenkig an dem zugehörigen Hauptholm 18 festgelegt. Der zweite Abschnitt der Gelenkstreben 25 ist mit einem von dem Gelenk 26 wegweisenden Ende jeweils an der Querstange 23 befestigt, kann dies insbesondere in einer um die Längsachse der Querstange 23 gelenkig drehenden Weise sein. Dieser Abschnitt ist nicht mit der Querstange 23 verbunden. Diese Gelenkstreben 25 dienen einem einfachen Ein- und Ausklappen des Kinderhochstuhls 10, begrenzen durch ihre maximal längsgestreckte Ausdehnung insbesondere den Öffnungswinkeln zwischen Hauptholm 18 und Stützholm 19 des jeweiligen Seitenteils 11, können so die Position in der Aufstellstellung mit vorgeben.

Die Figuren 3 a. bis d. und 4 a. bis d. sind, dies in zwei unterschiedlichen Perspektiven, einmal ein einer dreidimensionalen Ansicht (Fig. 3) und einmal in einem schematischen Längsschnitt (Fig. 4) die zusammengeklappte Stellung (jeweils in der Darstellung a. in den Figuren), die Aufstellstellung (jeweils die Darstellung d. in den Figuren) und, in den Darstellungen b. und c., zwei Zwischenpositionen gezeigt. Zu der Figur 4 ist anzumerken, dass zur weiteren Darstellung der Positionen von Nuten 22 diese auf der Außenseite der Hauptholme 18 eingezeichnet sind, obwohl diese Nuten 22 in dieser Ansicht eigentlich vorborgen auf der gegenüberliegenden Innenseite der Hauptholme 18 angeordnet sind.

In diesen Figuren 3 und 4 ist noch einmal zu erkennen, wie das Verschwenken der Stützholme 19 relativ zu den Hauptholmen 18 erfolgt und wie dabei die über das Verbindungsglied 27 miteinander zu einer Art Rahmen verbundenen Verbindungsstege 21 ausklappen und durch Verriegeln der Rastlasche 24 mit der Querstange 23 schließlich die Aufstellstellung sichern. Dabei ist klar, dass ein Überführen des Kinderhochstuhls 10 aus der in den Darstellungen a. gezeigten zusammengeklappten Stellung in die die in den Darstellungen d. gezeigte Aufstellstellung ebenso möglich ist, wie ein Verbringen des Kinderhochstuhls 10 aus der in den Darstellungen d. gezeigten Aufstellstellung zurück in die zusammengeklappte Stellung der Darstellungen a.

In Fig. 7 ist schließlich der Kinderhochstuhl 10 ohne den montierten Sicherheitsbügel 14 gezeigt, also in einer Situation, wie er genutzt wird, um z.B. größere und ältere Kinder aufzunehmen, die bereits ohne einen solchen Sicherheitsbügel 14 sicher auf dem Kinderhochstuhl 10 sitzen können, ohne etwa von dem Sitzbrett 13 zu fallen. Der Sicherheitsbügel 14 ist über, in diesem Ausführungsbeispiel handbetätigbare, Schrauben 28, bei denen es sich ebenfalls um den vorstehend genannten Sicherheitsschrauben vergleichbar gesicherte Schrauben, insbesondere wie nachfolgend näher beschriebene Sicherheitsschrauben 100, handeln kann, aber nicht muss, an den Hauptholmen 18 festgelegt. Die Längsenden des Sicherheitsbügels 14 werden dazu in auf der jeweiligen Innenseite des Hauptholms 18 passend ausgebildete Aufnahmenuten 29 eingeführt, von denen eine solche Aufnahmenut 29 in der Fig. 7 zu erkennen ist. Wenn die Längsenden des Sicherheitsbügels 14 passend in den Aufnahmenuten 29 sitzen, können die Schrauben 28 durch die Hauptholme 18 geführt in passende, in den Längsenden des Sicherheitsbügels ausgebildete Innengewinde eingeschraubt werden. Wenngleich diese Schrauben 28 selbstverständlich jede übliche Form von im Möbelbau verwendbaren Schrauben haben können, insbesondere auch solche, die zum Betätigen ein Werkzeug benötigen, ist es von Vorteil die Schrauben 28 als handbetätigbare Schrauben zu wählen. Denn dann kann auch eine Montage bzw. Demontage des Sicherheitsbügels 14 ohne hierfür benötigtes Werkzeug vorgenommen werden und ist für den Nutzer des Kinderhochstuhls einfach durchführbar.

Die vorstehende Beschreibung und die figürlichen Darstellungen lassen noch einmal erkennen, dass der hier beschriebene Kinderhochstuhl einfach aufgebaut und leicht zwischen einer zusammengeklappten Stellung und einer Aufstellstellung aus- und eingeklappt werden kann. Die besondere, jeweils schräg gerichtete und aufeinander zu verlaufende, in dem gezeigten Ausführungsbeispiel insbesondere mit gegenüber der Lotrechten jeweils entgegengesetzt geneigt gleichem Winkel gestellte, Position von Hauptholm 18 und Stützholm 19 sorgt zusammen mit der Verriegelung in dieser Stellung durch die Verbindungstege 21, bzw. den mit diesen und dem Verbindungsglied 23 gebildeten Rahmen für einen besonders stabilen Stand des Kinderhochstuhls 10 in der Aufstellstellung. Zugleich kann der Kinderhochstuhl 10 auch deshalb, weil, wie insbesondere auch in der Figur 5 zu erkennen ist, die Verbindungsstege 21 in der zusammengeklappten Stellung parallel zu und vor den Stützholmen 18 liegen, in einer kompakten Form gelagert werden, z.B. in einer Abseite oder in einem Abstellraum.

Weiterhin ist es mit besonderem Vorteil möglich, dass der hier beschriebene Kinderhochstuhl 10 bereits vormontiert in der zusammengeklappten Stellung ausgeliefert wird, dass hierbei ein flaches und mithin platzsparendes Versandpaket genutzt werden kann. Dies erspart einem Käufer ein aufwendiges Montieren des Möbels, das er durch Ausklappen sehr leicht aufstellen kann.

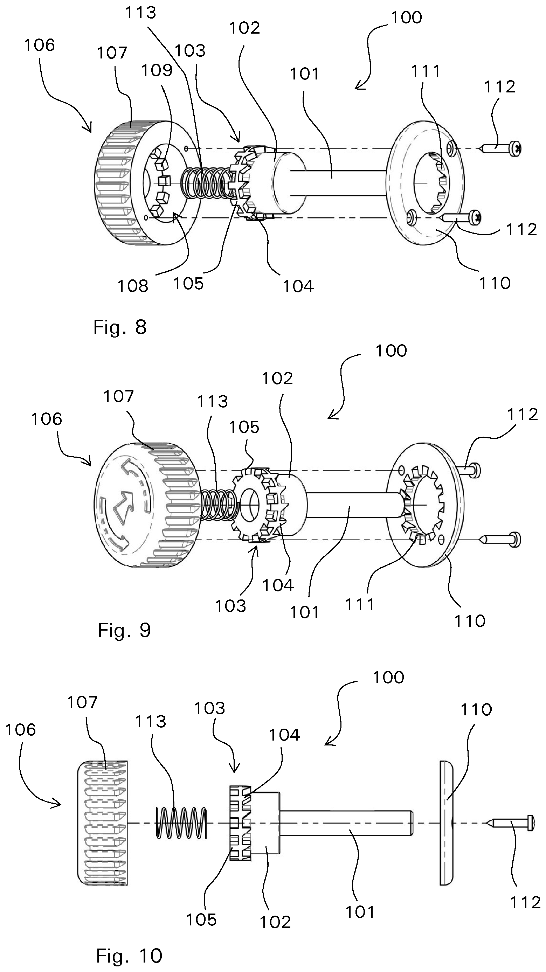

Noch komfortabler ist es für den Nutzer des hier beschriebenen Kinderhochstuhls 10, wenn die Schrauben zum Verbinden der Hauptholme 18 der Seitenteile 11 über die Verbindungsstange 15 ohne Werkzeug betätigt werden können. Es kann sich bei diesen Schrauben insbesondere um mit der Hand betätigbare Sicherheitsschrauben, im Besonderen wie nachfolgend beschriebene erfindungsgemäße Sicherheitsschrauben 100, zu denen eine mögliche Ausgestaltung in den Figuren 8 bis 10 gezeigt und veranschaulicht ist, handeln. Die Figuren 8 bis 10 zeigen in verschiedenen Ansichten, jeweils einer aus unterschiedlicher Perspektive genommenen dreidimensionalen Darstellung und einer Seitenansicht, jeweils Explosionsdarstellungen einer erfindungsgemäßen Sicherheitsschraube 100 in einer möglichen konstruktiven Ausgestaltung.

Die gezeigte Ausführungsform einer erfindungsgemäßen Sicherheitsschraube 100 hat einen Gewindeabschnitt 101 in dem ein (hier nicht näher dargestelltes) Außengewinde, hier, wie typischerweise gewählt ein Rechtsgewinde, ausgebildet ist. An einem Ende ist an dem Gewindeabschnitt 101 ein Kopfabschnitt 102 einstückig angeformt, der endseitig einen umlaufenden Kragen ausbildet. An diesem Kragen sind zu einem freien vorderen Ende des Gewindeabschnitts 101 weisend sägezahnartig gebildete erste Zähne 104 ausgebildet, die jeweils eine in axialer Richtung des Gewindeabschnitts 101 verlaufende und in einer die Schraube festziehenden ersten Drehrichtung vorn liegende erste Flanke und eine jeweils in entgegengesetzter Drehrichtung weisende schräg verlaufende zweite Flanke aufweisen. In entgegengesetzter Richtung, also von dem Gewindeabschnitt 101 weg nach außen weisend sind zweite, mit jeweils sowohl in der die Schraube 100 festziehenden als auch in der entgegengesetzten Drehrichtung weisenden und in axialer Richtung des Gewindeabschnitts 101 verlaufenden Flanken zweite Zähne 105 gebildet. Die ersten Zähne 104 und die zweiten Zähne 105 bilden jeweils ringförmige Kopfverzahnungen aus, die in entgegengesetzter Längsrichtung weisen.

Weiterhin ist ein Griffstück 106 vorgesehen, das einen innenliegenden Hohlraum 108 aufweist und an einer diesen Hohlraum 108 nach außen, von dem Gewindeabschnitt 101 wegweisenden Stirnseite begrenzenden Wand umfangsseitig eine erste Verzahnung 109 ausbildet. Diese erste Verzahnung 109 ist mit zu den zweiten Zähnen 105 korrespondierenden Zähnen gebildet, die ebenfalls jeweils in axialer Richtung verlaufende Flanken sowohl in der die Schraube 100 festziehenden Drehrichtung aufweisen als auch in der entgegengesetzten Drehrichtung. Das Griffstück 106 ist unterseitig mit einer Bodenplatte 110 verschlossen, durch die der Gewindeabschnitt 101 und ein Teil des Kopfabschnitts 102 durch eine mittige Öffnung hindurchgeführt sind. Die Bodenplatte 110 ist mit dem restlichen Griffstück 106 fest verbunden, z.B. wie in der in den Figuren 7 bis 9 gezeigten Ausgestaltung mittels zweier Schrauben 112 verschraubt, und fixiert so den umlaufenden Kragen des Kopfabschnitts 102 in dem Aufnahmeraum 108. Alternativ können aber auch andere Arte der Verbindung vorgesehen sein, mit der die Bodenplatte 110 mit dem restliche Griffstück 106 fest verbunden ist. Z. B. kann hier eine Rast- oder Schnappverbindung vorgesehen sein, insbesondere auch eine solche, die nach einem Zusammenfügen nicht ohne irreversible Beschädigung bzw. Zerstörung der beteiligen Komponenten wieder gelöst werden kann.

Um die zentrale Öffnung herum ist eine ringförmig gebildete zweite Verzahnung 111 gebildet mit nach oben in Richtung des Aufnahmeraums 108 vorstehenden Zähnen. Diese sind korrespondierend zu den ersten Zähnen 104 geformt und zwar derart, dass sie mit axial Richtung des Gewindeabschnitts 101 verlaufenden Flanken versehen sind, die, wenn die ersten Zähne 104 in Eingriff mit der zweiten Verzahnung 111 stehen an den axial verlaufenden Flanken der ersten Zähne 104 anliegen, und dass sie in entgegengesetzter Drehrichtung weisend schräge Flanken aufweisen mit einem zu dem Flankenwinkel der korrespondierend dort anliegenden schrägen Flanken der ersten Verzahnung 109 entsprechenden Flankenwinkel.

Das Griffstück 106 ist relativ zu dem Gewindeabschnitt 101 in der axialen Richtung des Gewindeabschnitts 101 längsverlagerbar und zwar derart, dass es zwischen einer ersten Position, in der die ersten Zähne 104 mit der zweiten Verzahnung 111 in Eingriff stehen, die zweiten Zähne 105 von der ersten Verzahnung 109 vollständig entkoppelt sind, und einer zweiten Position, in der die zweiten Zähne 105 mit der ersten Verzahnung 109 in Eingriff stehen, die ersten Zähne 104 von der zweiten Verzahnung 111 vollständig entkoppelt sind, verlagerbar ist. zwischen der den Hohlraum 108 nach außen, von dem Gewindeabschnitt 101 wegweisenden Stirnseite begrenzenden Wand und dem Kopfabschnitt 102 ist eine Druckfeder 113, hier eine Spiralfeder, angeordnet, die den Griffabschnitt 106 in die erste Position vorspannt.

Das Griffstück 106 ist mit einem ausreichend groß bemessenen Außendurchmesser gebildet, der ein Verdrehen der Sicherheitsschraube 100 zum Festziehen und Lösen per Hand ermöglicht. Für eine verbesserte Griffigkeit des Griffstücks 106 ist an dessen seitlichen Außenumfangsfläche eine Riffelung 107 gebildet.

Wenn sich nun, wie durch die Druckfeder 113 als Normalstellung vorgegeben das Griffstück 106 in der ersten Position befindet, kann über die jeweils axial in Richtung des Gewindeabschnitts 101 verlaufenden ersten Flanken der ersten Zähne 104 und den zugehörigen Flanken der Zähne der zweiten Verzahnung 110 ein in der Festschraubrichtung wirkendes Drehmoment auf den Gewindeabschnitt 101 ausgeübt und so die Sicherheitsschraube 100 festgezogen werden. Wird hingegen das Griffstück 106 in der entgegengesetzten Richtung gedreht, rutschen die schrägen Flanken der Zähne 104 an den korrespondierend schräg gebildeten Flanken der zweiten Verzahnung 111 ab und weicht das Griffstück 106 entgegen der Federkraft der Druckfeder 113 aus, ohne dass dabei bereits die zweiten Zähne 105 mit der ersten Verzahnung 109 in Eingriff gelangten. Somit ist ein unbeabsichtigtes Lösen der Sicherheitsschraube 100 nicht möglich. Erst dann, wenn das Griffstück 106 entgegen der Federkraft der Druckfeder 113 in der axialen Richtung auf den Gewindeabschnitt 101 zu gedrückt wird, greifen die zweiten Zähne 105 in die erste Verzahnung 109 ein und kann dann insbesondere ein in der der Festschraubrichtung entgegengesetzten Richtung wirkendes Drehmoment von dem Griffstück 106 auf den Kopfabschnitt 102 und damit auf den Gewindeabschnitt 101 übertragen werden zum Lösen der Sicherheitsschraube 100.

Der Vorteil einer solchen per Hand zu betätigenden Sicherheitsschraube 100 und deren Verwendung in den in den Figuren 1 bis 7 gezeigten, mit dem Bezugszeichen 100 jeweils bezeichneten Positionen, besteht darin, dass ein Nutzer eines wie hier beschriebenen Kinderhochstuhls 10 weder zum Aufbauen des Kinderhochstuhls 10 und dem erstmaligen Positionieren und Festlegen des Sitzbretts 13, ggf. auch des Fußbretts 16 ein Werkzeug benötigt, noch zum Verstellen der Positionen der Bretter 13, 16, wenn das Kind z.B. gewachsen ist und der Kinderhochstuhl 10 hinsichtlich der Sitzhöhe und der Abstellhöhe für die Füße neu eingestellt werden muss.

### Bezugszeichenliste

- 10: Kinderhochstuhl
- 11: Seitenteil
- 12: Rückenlehnelement
- 13: Sitzbrett
- 14: Sicherheitsbügel
- 15: Verbindungsstange
- 16: Fußbrett
- 17: Querstrebe
- 18: Hauptholm
- 19: Stützholm
- 20: Gelenkverbindung
- 21: Verbindungssteg
- 22: Nut
- 23: Querstange
- 24: Rastlasche
- 25: Gelenkstrebe
- 26: Gelenk
- 27: Verbindungsglied
- 28: handbetätigbare Schraube
- 29: Aufnahmenut
- 100: Sicherheitsschraube
- 101: Gewindeabschnitt
- 102: Kopfabschnitt
- 103: Kopplungsabschnitt
- 104: erste Zähne
- 105: zweite Zähne
- 106: Griffstück
- 107: Riffelung
- 108: Hohlraum
- 109: erste Verzahnung
- 110: Bodenplatte
- 111: zweite Verzahnung
- 112: Schraube
- 113: Druckfeder

## Patentansprüche

1. Sicherheitsschraube (100) zum Verbinden eines Seitenteils (11), insbesondere eines Hauptholms (18), eines Kinderhochstuhls, insbesondere eines klappbaren Kinderhochstuhls (10), mit einem Querverbindungselement (13), mit
• einem Gewindeabschnitt (101) und
• einem an einem Kopfabschnitt (102) des Gewindeabschnitts (101) ausgebildeten Kopplungsabschnitt,
wobei der Kopplungsabschnitt einen umlaufenden Kragen ausbildet mit auf einer dem Gewindeabschnitt (101) zugewandten Unterseite ausgebildeten ersten Kopplungsstrukturen (104) und mit auf einer dem Gewindeabschnitt abgewandten Oberseite ausgebildeten zweiten Kopplungsstrukturen (105), und mit einem Griffstück (106), das auf den Kopfabschnitt (102) aufgesetzt ist, diesen in einem innen liegenden Aufnahmeraum (108) aufnimmt und relativ zu dem Kopfabschnitt (102) in einer axialen Richtung des Gewindeabschnitts (101) verlagerbar ist,
wobei das Griffstück (106) über eine Feder (113) in eine erste axiale Position vorgespannt ist, in der es mit den ersten Kopplungsstrukturen (104) koppelt und dabei eine Übertragung eines den Gewindeabschnitt (101) festziehenden Drehmoments ermöglicht, eine Übertragung eines den Gewindeabschnitt (101) lösenden Drehmoments jedoch verhindert, und wobei, wenn das Griffstück (106) gegen die Federkaft in eine zweite axiale Position gebracht ist, es mit den zweiten Kopplungsstrukturen (105) koppelt und dabei eine Übertragung eines den Gewindeabschnitt (101) lösenden Drehmoments ermöglicht.

2. Sicherheitsschraube (100) nach Anspruch 1, **dadurch gekennzeichnet, dass** die ersten Kopplungsstrukturen (104) durch radial von dem Kragen nach unten vorstehende sägezahnartig gebildete Zähne (104) gebildet sind, die jeweils auf einer in eine erste, den Gewindeabschnitt (101) festziehende Drehrichtung weisenden Seite eine erste, in axialer Richtung des Gewindeabschnitts (101) verlaufende Flanken aufweisen und auf ein einer zweiten, entgegengesetzten, in eine den Gewindeabschnitt (101) lösenden Drehrichtung weisenden Seite jeweils eine schräg zu der axialen Richtung des Gewindeabschnitts (101) verlaufende Flanke aufweisen, und dass an dem Griffstück (106) eine den Aufnahmeraum (108) zum Gewindeabschnitt (101) hin begrenzende Bodenplatte (110) vorgesehen ist, durch die der Kopfabschnitt (102) hindurchgeführt ist und in der eine zu der ersten Kopplungsstruktur (104) korrespondierende Verzahnung (111) gebildet ist mit in die erste Drehrichtung weisenden entlang der axialen Richtung des Gewindeabschnitts (101) verlaufenden Flanken und mit in die zweite Drehrichtung weisenden, schräg verlaufenden Flanken und
dass die zweiten Kopplungsstrukturen (105) durch radial von dem Kragen nach oben vorstehende Zähne (105) gebildet sind, die jedenfalls auf einer in die zweite Drehrichtung weisenden Seite jeweils eine in axialer Richtung des Gewindeabschnitts (101) verlaufende Flanken aufweisen, und dass an dem Griffstück (106) eine der zweiten Kopplungsstruktur (105) zugewandte, zu dieser korrespondierende Verzahnung (109) vorgesehen ist mit in die zweiten Drehrichtung weisenden entlang der axialen Richtung des Gewindeabschnitts (101) verlaufenden Flanken.

3. Sicherheitsschraube (100) nach Anspruch 2, **dadurch gekennzeichnet, dass** die radial von dem Kragen nach oben vorstehenden Zähne (105) der zweiten Kopplungsstrukturen (105) auf einer in die erste Drehrichtung weisenden Seite jeweils eine in axialer Richtung des Gewindeabschnitts (101) verlaufende Flanken aufweisen, und dass die an dem Griffstück (106) vorgesehene, der zweiten Kopplungsstruktur (105) zugewandte und zu dieser korrespondierende Verzahnung (109) in die erste Drehrichtung weisende entlang der axialen Richtung des Gewindeabschnitts (101) verlaufenden Flanken aufweist.

4. Sicherheitsschraube (100) nach einem der vorhergehenden Ansprüche, **dadurch gekennzeichnet, dass** zwischen dem Kopfabschnitt (103) und einem dem Gewindeabschnitt (101) abgewandten Deckabschnitt des Griffstücks (106) eine Druckfeder (113) angeordnet ist.

5. Verwendung einer Sicherheitsschraube (100) nach einem der Ansprüche 1 bis 4 zum Verbinden von zwei Elementen eines Kinderhochstuhls.
